# DEMANDE DE BREVET EUROPEEN

(11) **EP 4 772 542 A2**
(43) Date de publication de la demande: **08.07.2026**
(21) Numéro de dépôt: 25225865.2
(22) Date de dépôt: 19.12.2025
(51) Int. Cl.: C08B 37/00, C08L 5/00, C08J 3/075, C11D 3/00, C11D 3/37

(54) **PROCEDE DE RETICULATION DE POLYSACCHARIDES EN MILIEU HYDRO ORGANIQUE CONCENTRE FORMULATIONS DETERGENTES EN COMPRENANT**

(30) Priorité: 07.01.2025 FR 2500128
(71) Demandeur: Société d'Exploitation de Produits pour les Industries Chimiques SEPPIC, 75321 Paris cedex 07 (FR)
(72) Inventeur: BODOC, Miruna, 75321 Paris Cedex 07 (FR); CANDILLE, Hélène, 75321 Paris Cedex 07 (FR); COLAS, Aurélie, 75321 Paris Cedex 07 (FR); GUILBOT, Jérome, 75321 Paris Cedex 07 (FR); MONTEILLET, Stéphane, 75321 Paris Cedex 07 (FR)
(74) Mandataire: Air Liquide

(57) **Abrégé**

L'invention concerne un nouveau procédé de réticulation de polysaccharides d'origine naturelle dans un milieu hydroorganique ainsi que des formulation détergentes en comprenant.

## Description

### Domaine technique de l'invention

L'invention relève du domaine de la détergence ménagère et industrielle. L'invention concerne plus particulièrement un nouveau procédé de synthèse d'agents épaississants d'origine naturelle mis en œuvre dans de telles formulations.

### ÉTAT DE LA TECHNIQUE ANTÉRIEURE

Les formulations détergentes à usage industriel ou ménager de l'état de la technique antérieure sont soit alcalines soit acides.
Les formulations détergentes alcalines sont généralement utilisées pour éliminer des surfaces solides, les salissures de matières grasses.
Les formulations détergentes acides sont utilisées non seulement pour éliminer les salissures grasses mais aussi pour détartrer lesdites surfaces, notamment celles d'installations de l'industrie agro-alimentaire, ou d'équipements électroménagers, comme les lave-vaisselle et les machines à café. De plus, elles sont aussi utilisées pour éliminer des résidus de béton ou de ciment ainsi que pour des opérations de nettoyage de graisses présentes en profondeur sur des surfaces de béton avant toute opération de peinture. Elles ne doivent ne pas provoquer une formation importante de mousse lors de l'opération de nettoyage et doivent avoir de bonnes propriétés mouillantes et détergentes.

Les formulations détergentes à usage industriel ou ménager se présentent sous forme de poudres, de concentrés, de liquides tels que des émulsions, et selon les cas, sont mises en œuvre directement ou après dilution dans un solvant approprié. Sous forme liquide, telles que notamment les émulsions, elles comportent des modificateurs de rhéologie des phases polaires. Parmi les polymères modificateurs de rhéologie des phases polaires, il y a notamment les polyélectrolytes anioniques ou cationiques, amphiphiles, linéaires ou ramifiés, réticulés ou non réticulés. Ces polymères, une fois introduits dans des phases polaires présentent la propriété de se déployer sous l'effet des forces de répulsions électrostatiques dues à la présence des charges négatives et/ou positives sur le squelette polymérique, linéaire ou ramifié, non réticulé ou réticulé. Les modificateurs de rhéologie apportent à la fois une augmentation de la viscosité de la phase polaire et confère une certaine consistance et stabilité à la formule détergente ou nettoyante à épaissir.

Malgré l'offre commerciale importante, la demande de nouveaux épaississants de phases polaires pour les formulations détergentes à usage industriel ou ménager reste d'actualité car les polymères utilisés aujourd'hui sont majoritairement d'origine pétrochimique, alors que les industries utilisatrices sont engagées dans une démarche d'éco-conception. Il est donc nécessaire de développer des épaississants alternatifs qui, tout en ayant des propriétés comparables, ont un profil environnemental amélioré, soit par leur origine ou celle de leurs précurseurs, soit par leur caractère biodégradable. L'utilisation de polysaccharides semble constituer une solution alternative acceptable car ils sont déjà utilisés depuis de nombreuses années comme agents modificateurs de la texture ou de la rhéologie dans l'industrie pour préparer des produits pharmaceutiques, cosmétiques ou alimentaires.

Selon leur constitution chimique, ils peuvent être utilisés comme agents gélifiants ou comme agents épaississants. Par agent épaississant, on entend un composé chimique qui augmente la viscosité du milieu dans lequel il est introduit. Par agent gélifiant, on entend un composé qui transforme un milieu liquide en un état structuré, qui ne coule pas, par formation d'un réseau tridimensionnel au sein du liquide ; le gel étant considéré comme un état intermédiaire entre l'état liquide et l'état solide.

Les polysaccharides sont des polymères de saccharides ou plus couramment de sucres. Selon la nomenclature de l'Union internationale de chimie pure et appliquée (IUPAC), par saccharides, on désigne des oses, des composés d'oses proprement dits et leurs dérivés obtenus soit par réduction d'un groupement carbonyle, soit par oxydation d'une ou de plusieurs fonctions hydroxyle, soit par le remplacement d'une ou de plusieurs fonctions hydroxyles par un atome d'hydrogène, ou une fonction amine, phosphate sulfate.

Les polysaccharides les plus couramment utilisés pour les industries susmentionnées sont majoritairement choisis parmi les polymères contenant des unités monomériques d'oses tels que le glucose, le galactose, le mannose, le xylose, l'arabinose ou des unités monomériques de dérivés d'oses dans lesquels la fonction hydroxyle du carbone terminal a été oxydée en fonction carboxyle.

Parmi les polysaccharides constitués uniquement d'oses (polyoses), il y a notamment :
l'amidon et les dérivés d'amidon qui est un homopolymère du glucose comportant des liaisons glycosidiques alpha-1,4 ; on distingue l'homopolymère linéaire (liaisons alpha-1,4 uniquement) appelé amylose (environ 20% de l'amidon) et un homopolymère ramifié (liaisons glycosidiques alpha-1,4 et alpha-1,6) appelé amylopectine (environ 80% de l'amidon).
L'amidon est obtenu à partir de végétaux comme le blé, le maïs ou la pomme de terre ;
La cellulose qui est un homopolymère de glucose comportant liaisons glycosidiques béta-1,4 ; La cellulose est extraite du bois et est principalement utilisée dans l'industrie papetière pour fabriquer de la pâte à papier.
L'hémicellulose qui est un polymère de différents sucres comme le glucose, le mannose, le galactose, le xylose, l'arabinose, le rhamnose, le xylose étant souvent majoritaire et l'hémi-cellulose comportant aussi parfois des acides uroniques.

Parmi les polysaccharides constitués de dérivés d'oses, il y a notamment :
Les galactanes sulfatés qui sont des polymères du galactose pouvant avoir des groupements esters-sulfate appendus, tels que les polyosides algaux ou l'agar ;
Les uronanes qui sont les polymères d'acides uroniques comme les algines et les pectines,
Les hétéropolymères d'oses parmi lesquelles il y a les galactomannanes, comme les gommes de guar, de tara, de caroube et de fenugrec et les glucomannoglycanes comme la gomme de Konjac et
les xyloglycanes comme la gomme de Tamarin,
les hétéropolymères d'oses et d'acides uroniques ; ces polymères se trouvent notamment dans les exsudats de sève, comme les exsudats des gommes arabique et de karaya ; ils sont aussi produits aussi par des micro-organismes comme les gommes xanthane et gellane,
les glucosaminoglycanes : ce sont des polyosides formés à partir du glucose par remplacement de son hydroxyle sur C-2 par une fonction amine (appelé 2-amino-2-désoxy-D-glucose ou glucosamine) ; La fonction amine peut être acétylée. Parmi les polysaccharides de cette classe, on trouve le chitosan formé uniquement de motifs glucosamine, la chitine avec les fonctions amines acétylées et l'hyaluronane dont l'unité de répétition est un dimère de glucosamine et d'acide glucuronique.

La modification chimique de polysaccharides constitue une voie permettant d'accroître leurs performances initiales et d'apporter également de nouvelles propriétés. Il s'agit soit de la fonctionnalisation chimique par greffage de nouveaux groupements chimiques de poids moléculaires plus ou moins importants, soit de la réticulation qui consiste à associer les chaînes polysaccharidiques entre elles au moyen d'un agent de réticulation au moins difonctionnel appelé réticulant. Dans les deux cas, les fonctions des polysaccharides de départ impliqués restent les groupes hydroxyle (oses), amino (dérivés de glucosamine) ou carboxyliques (dérivés d'acides uroniques).

Cependant, de telles fonctionnalisations sont souvent réalisées avec des réactifs peu respectueux de l'environnement ou selon des modes opératoires ne respectant que partiellement les douze principes de la chimie verte tels que l'utilisation de solvants organiques. De plus, les produits correspondants obtenus ne permettent pas aujourd'hui de concurrencer en termes de performance épaississante ou gélifiante, les polymères épaississants d'origine pétrochimique commercialisés.

Parmi les agents réticulants couramment utilisés pour la réticulation de polysaccharides naturels, seuls ceux appartenant à la famille de dérivés polyphosphatés comme le triméthaphosphate de sodium (STMP) ou le tripolyphosphate de sodium (STPP), sont intéressants d'un point de vue environnemental. Le (STMP) est un composé non toxique pour l'homme, couramment utilisé dans les industries alimentaire et pharmaceutique ; Il est synthétisé par déshydratation à haute température du polyphosphate de sodium ; il est partiellement soluble dans l'eau froide, très peu soluble dans l'eau chaude, insoluble dans le méthanol, le diéthyl éther, le n-octanol ou l'acétone. La réticulation de polysaccharides avec le (STMP), décrite dans la littérature brevet ou académique, est effectuée en milieu aqueux, dans des conditions de pH basique, à une température entre 20°C et 50°C pendant plusieurs heures.

Cependant, les procédés de réticulation mis en œuvre jusqu'à aujourd'hui, conduisent à des gels de polymère naturel réticulés très dilués, soit environ à 3% massique de polymère réticulé. Une telle dilution ne permet pas de préparer à l'échelle industrielle des polysaccharides naturels réticulés sous forme de poudres. D'autre part, la commercialisation d'un tel hydrogel, à savoir une solution comprenant de l'eau et du polysaccharide réticulé à une teneur massique de 3% ou de 5% engendre des surcoûts logistiques prohibitifs du fait de la grande quantité d'eau à transporter. Il existe donc un besoin de développer un procédé de réticulation qui conduise à un gel de polymère d'origine naturelle soit plus concentré soit dénué d'eau ajoutée, et se présentant sous la forme d'une poudre.

### EXPOSE DE L'INVENTION

C'est la raison pour laquelle, selon un premier aspect l'invention a pour objet , un procédé de préparation d'au moins un polysaccharide réticulé comprenant les étapes suivantes ;
Une étape a) de préparation d'un mélange eau - solvant polaire, ledit solvant polaire étant choisi dans le groupe constitué par les alcools aliphatiques comportant de un à quatre atomes de carbone, des cétones comportant de trois à cinq atomes de carbone et les polyols comportant de deux ou trois groupes hydroxyle et de deux à six atomes de carbone ladite préparation étant effectuée en mélangeant l'eau et ledit solvant polaire dans des proportions massiques telles que le rapport massique solvant polaire sur eau est supérieur ou égal à 0,4 et inférieur ou égal à 19,0 ;
Une étape b) de dispersion d'au moins un polysaccharide dans ledit mélange eau - solvant polaire préparé à l'étape a), pour obtenir un milieu réactionnel comprenant pour 100% de sa masse, une proportion massique en polysaccharide supérieure à 10% massique et inférieure ou égale à 55% massique, ledit polysaccharide étant choisi dans le groupe constitué par la gomme xanthane, le xan-thane greffé avec des chaines hydro-carbonées comportant de deux à vingt-deux atomes de carbone et plus particulièrement, la gomme xanthane estérifiée par de l'acide dodéca-noïque, les gommes de guar et de konjac, les carraghénanes et plus particulièrement le kappa-carraghénane et l'iota-carraghénane et des mélanges de deux ou de plusieurs desdits polysaccharides de ce groupe ;
Une étape c) d'ajustement du pH du milieu réactionnel préparé à l'étape b) à une valeur supérieure ou égale à 8,0 et inférieure ou égale à 13,0 et plus particulièrement supérieure ou égale à 8,5 et inférieure ou égale à 12,5 en y ajoutant une base ;
Une étape d) de réticulation dudit au moins un polysaccharide par addition dans le milieu réactionnel basique obtenu à l'issue de l'étape c), d'un agent de réticulation phosphate de choisi dans le groupe constitué du trimétaphosphate de sodium (STMP) et du tripolyphosphate de sodium (STPP), pour obtenir une dispersion basique comprenant du polysaccharide réticulé ;
Une étape e) d'ajustement du pH de ladite dispersion basique obtenue l'issue de l'étape d), à une valeur inférieure ou égale à 7,0 pour obtenir une dispersion non-basique dudit polysaccharide réticulé ;
Une étape f) de filtration de ladite dispersion non-basique obtenue à l'issue de l'étape e) pour en récupérer ledit au moins un polysaccharide réticulé attendu ; optionnellement suivie :
   Soit d'une étape g) de séchage pour en éliminer les traces de solvants résiduels,
   Soit d'une étape h) d'atomisation dudit au moins un polysaccharide réticulé obtenu à l'étape f) pour en obtenir une poudre.

Selon un aspect particulier du procédé tel que défini ci-dessus, les étapes a) et b) sont simultanées et constituent une seule étape A) de préparation d'un milieu réactionnel par mélange d'eau, d'un solvant polaire choisi dans le groupe constitué par les alcools aliphatiques comportant de un à quatre atomes de carbone, des cétones comportant de trois à cinq atomes de carbone et les polyols comportant de deux ou trois groupes hydroxyle et de deux à six atomes de carbone et d'un polysaccharide en des proportions telles que
la proportion massique en ledit au moins un polysaccharide est supérieure à 10% massique et inférieure ou égale à 55% massique dudit milieu réactionnel et que
le rapport massique solvant polaire sur eau dudit mélange est supérieur ou égal à 0,4 et inférieur ou égal à 19,0.

Dans le procédé tel que défini ci-dessus, le solvant polaire du mélange préparé à l'étape a) ou dudit milieu réactionnel préparé à l'étape A), est plus particulièrement choisi dans le groupe constitué par le méthanol, l'éthanol, le butanol, l'isopropanol, l'acétone, la méthyl éthyl cétone (MEK), le glycérol, le 1,3-propanediol, le butylèneglycol, le 1,3-butanediol, le pentylène glycol l'hexylène glycol et le 2-méthyl 2,4-pentanediol ; selon ce mode particulier, ledit solvant polaire est tout particulièrement choisi dans le groupe constitué par l'éthanol et l'isopropanol.

Dans le procédé tel que défini ci-dessus, un ou plusieurs sels sont optionnellement ajoutés lors de la préparation du mélange eau - solvant préparé à l'étape a) ou dudit milieu réactionnel préparé à l'étape A), par exemple un sel choisi dans le groupe constitué du chlorure de sodium, du chlorure de calcium, du chlorure de magnésium, du sulfate de calcium, du sulfate de magnésium, du carbonate de calcium, du carbonate de magnésium, de l'aspartate de magnésium et autres sels monovalents ou divalents acceptables dans les industries cosmétique pharmaceutique phytosanitaire ou alimentaire.

Dans le procédé tel que défini ci-dessus, le rapport massique solvant polaire sur eau dudit mélange préparé à l'étape a) ou dudit milieu réactionnel préparé à l'étape A), est plus particulièrement supérieur ou égal à 1,0 et inférieur ou égal à 4,0.

Dans le procédé tel que défini ci-dessus, le milieu réactionnel préparé à l'étape b) ou à l'étape A) comprend plus particulièrement pour 100% de sa masse, une proportion massique en ledit au moins un polysaccharide supérieure ou égale à 15% et inférieure ou égale à 45% massique.

Selon un aspect particulier de la présente invention, si nécessaire, l'étape b) de solubilisation ou de dispersion dudit au moins un polysaccharide ou l'étape A) de préparation du dit milieu réactionnel est effectué à une température comprise entre 50°C et 100°C, préférentiellement entre 60°C et 80°C.

Dans le procédé tel que défini ci-dessus, l'étape c), Elle est effectuée en ajoutant au mélange réactionnel préparé à l'étape b) ou l'étape A), une base alcaline, comme l'hydroxyde de sodium ou l'hydroxyde de potassium, l'ammoniaque, ou une base aminée. On utilise plus particulièrement la soude et notamment une solution aqueuse de soude tétramolaire, la potasse, l'ammoniaque ou la triéthylamine. Dans le procédé tel que défini ci-dessus, à l'étape c), le pH est plus particulièrement ajusté à une valeur supérieure ou égale à 10,0 et inférieure ou égal à 12,5.

Dans le procédé tel que défini ci-dessus, le rapport massique réticulant STMP ou STPP mis en œuvre à l'étape d) sur ledit au moins un polysaccharide de départ est supérieur ou égal à 0,0001 et inférieur ou égal à 0,0700 ; il est plus particulièrement supérieur ou égal à 0,0003 et inférieur ou égal à 0,0300. La température de réticulation peut varier entre 5°C et 100°C, préférentiellement entre 10°C et 80°C et idéalement entre 20°C et 70°C.

Selon un autre mode particulier du procédé tel que défini ci-dessus, l'agent de réticulation mis en œuvre à l'étape d) est le trimétaphosphate de sodium (STMP).

Dans le procédé tel que défini ci-dessus, l'étape e) d'ajustement du pH est notamment effectuée un acide fort comme l'acide chlorhydrique ou l'acide sulfurique, pour arrêter le mécanisme de réticulation. Elle est généralement effectuée à température ambiante, entre 15°C et 35°C.

Le procédé tel que défini ci-dessus permet d'obtenir des gels de polysaccharides plus concentrés, voire sous forme solide, ce qui rend industriellement possible leur utilisation comme substitut des polymères d'origine pétrolière.

C'est pourquoi l'invention a aussi pour objet l'utilisation d'un polysaccharide réticulé ou d'un mélange de polysaccharides réticulés tel qu'obtenus par le procédé tel que défini ci-dessus en vue d'épaissir de stabiliser ou d'émulsionner une formulation détergente à usage industriel ou ménager, comportant une phase polaire. Elle a encore pour objet l'utilisation du polysaccharide réticulé tel qu'obtenu par le procédé tel que défini ci-dessus en vue de suspendre des particules solides dans une formulation détergente à usage industriel ou ménager comportant une phase polaire.

C'est pourquoi l'invention a aussi pour objet une formulation aqueuse à usage industriel ou ménager comportant une phase polaire caractérisée en ce qu'elle comprend pour 100% de sa masse, de 0,1% à10,0% et plus particulièrement de 0,5% à 5,0% d'un polysaccharide réticulé ou d'un mélange de polysaccharides réticulés tel qu'obtenus par le procédé tel que défini précédemment, comme agent épaississant, comme agent stabilisant ou comme agent émulsionnant de ladite formulation détergente à usage industriel ou ménager comportant une phase polaire ou comme agent apte et destiné à suspendre des particules solides au sein de ladite formulation aqueuse détergente à usage industriel ou ménager comportant une phase polaire.

Par formulation détergente à usage industriel ou ménager, comportant une phase polaire, on entend au sens de la présente invention des compositions liquides à 20°C, conçues et utilisées pour le nettoyage de différents types de surfaces, par exemple les fibres textiles, le verre, la céramique, les carrelages, le bois, le métal, les matériaux composites. Elles trouvent leurs applications pour nettoyer lesdites surfaces solides de salissures, comme le nettoyage de bouteilles ou de vaisselle manuellement ou en machine, le nettoyage du linge manuellement ou en machine, le nettoyage des sols, des surfaces métalliques souillées par des graisses, des vitres, des toilettes ou des cuves de stockage.

Dans le cadre de la présente invention, la phase polaire constitutive de la formulation détergente à usage industriel ou ménager, comportant une phase polaire est notamment choisie dans le groupe constitué par l'eau, les mélanges hydroalcooliques, comme les mélanges eau-éthanol, eau-propanol, eau-isopropanol, eau-butanol, eau isobutanol, eau-sec-butanol et eau-tert-butanol, les mélanges eau-polyols comme les mélanges eau-éthylèneglycol, eau-propylèneglycol, eau-butylèneglycol, eau-glycérol ou eau-1,3-propanediol.

Parmi ces formulations détergentes à usage industriel ou ménager, comportant une phase polaire, on peut distinguer les formulations détergentes alcalines et les formulations détergentes acides. Elles se présentent généralement sous la forme d'une solution, d'une solution aqueuse, d'une émulsion ou d'une microémulsion à phase continue aqueuse, d'une émulsion ou d'une microémulsion à phase continue huileuse, d'un gel aqueux, d'une mousse, ou encore sous la forme d'un aérosol. Elle peut être appliquée directement par trempage, par aspersion ou par vaporisation sur la surface à nettoyer ou bien par l'intermédiaire de tout type de support destiné à être mis en contact avec la surface solide à nettoyer (papier, lingette, textile).

Dans le cadre de la présente invention par agent stabilisant de ladite formulation détergente à usage industriel ou ménager, comportant une phase polaire, on signifie que ledit polysaccharide réticulé ou ledit mélange de polysaccharides réticulés tel qu'obtenus par le procédé tel que défini précédemment, est apte et destiner à stabiliser lesdites formulations qui sont sous forme d'une émulsions ou d'une mi-croémulsions, en leur conférant un aspect homogène pendant le stockage dans différentes conditions, et plus particulièrement à 25°C pendant une durée au moins égale à un mois, et plus particulièrement à 4°C pendant une durée au moins égale à un mois, et plus particulièrement à 45°C pendant une durée au moins égale à un mois.

Dans le cadre de la présente invention par agent apte et destiné à suspendre des particules solides au sein de ladite formulation aqueuse détergente à usage industriel ou ménager comportant une phase polaire, il est signifié que ledit polysaccharide réticulé ou ledit mélange de polysaccharides réticulés tel qu'obtenus par le procédé tel que défini précédemment, est apte et destiné à suspendre des particules solides ayant un diamètre moyen apparent compris entre un micromètre et cinq millimètres, plus particulièrement entre dix micromètres et un millimètre, qui peuvent revêtir différentes géométries, régulières ou irrégulières et notamment se présenter sous forme de perles, de billes, de tiges, de paillettes, de lamelles ou de polyèdres. Comme exemples de telles particules solides, il y a les micas, les oxydes de fer, de titane, de zinc, ou d'aluminium, le talc, la silice, le kaolin, les argiles, le nitrure de bore, les carbonates de calcium oude magnésium, l'hydrogénocarbonate de magnésium, les pigments colores inorganiques, les polyamides comme le nylon-6, les polyéthylènes, les polypropylènes, les polystyrènes, les polyesters, les polymères acryliques ou méthacryliques comme les polyméthylméthacrylates, le polytétrafluoroéthylène, les cires cristallines ou microcristallines, des sphères poreuses, le sulfure de sélénium, le pyrithione de zinc, les amidons, les alginates, les fibres de végétaux, les particules de Loofah, les particules d'éponges.

De façon générale ladite formulation détergente à usage industriel ou ménager, comportant une phase polaire objet de la présente invention, comporte également des ingrédients habituellement mis en œuvre dans le domaine du nettoyage de surfaces solides ou de fibres textiles, comme les tensioactifs détergents non-ioniques, cationiques ou amphotères, des polymères cationiques ou non-ioniques, des agents tensioactifs démoussants ou peu moussants, des agents épaississants, des enzymes, des agents de blanchiment, des agents anticorrosion, des solvants, des agents acides, des agents alcalins, des agents anticalcaire, des agents conservateurs, des parfums, des colorants, des agents répulsifs, des agents oxydants, des adjuvants de détergence, des agents antisalissure, les agents anti-redéposition. Par agents tensioactifs détergents, on désigne des agents de surface confèrent à la ladite formulation détergente à usage industriel ou ménager, comportant une phase polaire telle que définie précédemment, la capacité de détacher les salissures présentes sur les surfaces solides à nettoyer, et de les maintenir en suspension, pour être ensuite éliminées lors de l'étape de rinçage. Ces agents tensioactifs détergents peuvent être de nature anionique, cationique, amphotère ou non-ionique.
Comme exemples de agents tensioactifs détergents anioniques optionnellement présents dans la formulation détergente telle que définie ci-dessus, il y a les sels de métaux alcalins, de métaux alcalino-terreux, d'ammonium, d'amines ou d'amino alcools, d'alkyléthers sulfates, d'alkyl sulfates, d'alkylamidoéther sulfates, d'alkylarylpolyéther sulfates, de monoglycérides sulfates, d'alpha-olefinesulfonates, de paraffines sulfonates, d'alkyl phosphates, d'alkylether phosphates, d'alkyl sulfonates, d'alkylamide sulfonates, d'alkylaryl sulfonates, d'alkyl carboxylates, d'alkylsulfosuccinates, d'alkylether sulfosuccinates, d'alkylamide sulfosuccinates, d'alkyl sulfo-acetates, d'alkyl sarcosinates, d'acylisethionates, de N-acyl taurates, d'acyl lactylates, de dérivés N-acylés d'acides aminés, de dérives N-acyles de peptides, de dérivés N-acyles de protéines et d'acides gras ;
Comme exemples de tensioactifs amphotères détergents optionnellement présents dans la formulation détergente telle que définie ci-dessus, il y a les alkylbetaines, les alkylamidobétaïnes, les sultaïnes, les alkylamidoalkylsulfobétaïnes, les dérivés d'imidazolines, les phosphobétaïnes, les amphopolyacétates et les amphopropionates, le beta alanine, N-(2-carboxy éthyl)-N(2-éthyl hexyl) de sodium commercialise sous le nom de marque TOMAMINE^{®} 30 AMPHOTERIC 400 SURFACTANT ;
Comme exemples de tensioactifs cationiques détergents optionnellement présents dans la formulations détergentes telle que définie ci-dessus, il y a les dérivés d'ammoniums quaternaires.
Comme exemples de tensioactifs non ioniques détergents optionnellement présents dans la formulation détergente telle que définie ci-dessus, il y a les alkylpolyglycosides comportant un radical aliphatique, linéaire ou ramifié, saturé ou insaturé, et comportant de 8 à 16 atomes de carbone; les dérivés d'huile de ricin, les polysorbates, les amides de coprah, les N-alkylamines.

Comme exemples d'agents acides optionnellement présents dans la formulation détergente telle que définie ci-dessus, il y a :
Les acides minéraux comme acides chlorhydrique, nitrique, phosphorique, sulfurique, sulfamique hypophosphoreux, phosphoreux, hypochloreux, perchlorique, borique, manganique, permanganique, chromique, periodique, iodique, hypo-iodeux, bromohydrique, iodhydrique et fluorhydrique ;
Les acides organiques comme les acides formique, carbonique, acétique, propionique, benzoïque, salicylique, oxalique, succinique, glutamique, adipique, glycolique, lactique, malique, maléique, tartrique, citrique, sorbique, dihydro acétique, diméthyl sulfamique, fumarique, glutamique, isopropyl sulfamique, valérique, benzènesulfonique, xylènesulfonique, 2-éthyl-hexanoïque, caprique, caproïque, cresylique, dodécylbenzènesulfonique, peracétique, chloroacétique et gluconique.

Comme exemples d'agents alcalins optionnellement présents dans la formulation détergente telle que définie ci-dessus, il y a les hydroxydes de métaux alcalins ou alcalino-terreux comme les hydroxydes de sodium, de potassium, de baryum ou de calcium.

Comme exemples d'agents anticalcaires optionnellement présents dans la formulation détergente telle que définie ci-dessus, il y a les éléments du groupe constitué par :
les agents séquestrants qui ont pour effet de complexer les ions calcium et magnésium pour former des complexes hydrosolubles ensuite éliminés pendant le rinçage, comme le tripolyphosphate de sodium (TPP), l'éthylènediaminetétracetate (EDTA), le tétraacétyléthylenediamine (TAED), le méthyl glycine diacétate (MGDA), le nitrolotriacétate de sodium (Na3NTA), les gluconates de sodium ou de potassium, les érythorbates de sodium ou de potassium, les polycarboxylates de sodium ou de potassium, et le citrate de sodium ;
les agents échangeurs d'ions qui ont pour effet d'échanger leurs ions sodium et de complexer les ions calcium et magnésium pour former des complexes hydrosolubles ensuite éliminés pendant le rinçage, comme les zéolithes ou aluminosilicates de sodium, ou les silicates de sodium lamellaires ; et
les agents précipitants qui ont pour effet d'éliminer les ions responsables de la solidité de l'eau en formant des composés de calcium insolubles, éliminés par la suite avec les salissures, comme le carbonate de calcium et le métasilicate de sodium.

Selon un aspect plus particulier, la formulation détergente telle que définie ci-dessus comprend au moins agent anticalcaire choisi parmi les éléments du groupe constitué par le métasilicate de sodium, le tripolyphosphate de sodium (TPP), le l'éthylènediaminetetracetate (EDTA), le tétraacétyléthylènediamine (TAED), le méthyl glycine diacetate (MGDA), le nitrolotriacetate de sodium (Na3NTA), le gluconate de sodium, le citrate de sodium et le carbonate de calcium.

Comme exemples de tensioactifs non-ioniques démoussants ou peu moussants optionnellement présents dans la formulation détergente telle que définie ci-dessus, il y a :
Des copolymères blocs d'oxyde d'éthylène et d'oxyde de propylène, et tout particulièrement les copolymères blocs d'oxyde d'éthylène et d'oxyde de propylène commercialisés sous le nom de marque PLURONIC^{™}, le PLURONIC^{™}PE 6100 et le PLURONIC^{™}PE 6200,
Des tensioactifs non ioniques démoussants de formule : R1-X-((CH2-CH(CH3)-O)u-(CH2-CH2-O)v-Y)w dans laquelle R1 représente un radical aliphatique hydrocarboné, saturé ou insaturé, linéaire ou ramifié, comportant de 6 à 18 atomes de carbone, X représente un atome d'azote ou un atome d'oxygène, u et v, identiques ou différents, représentent chacun un nombre entier compris entre 1 et 50, w est soit égal à 1 si X représente un atome d'oxygène, soit égal à 1 ou à 2 si X représente un atome d'azote, et Y représente un groupe fonctionnel bloquant choisi parmi les éléments du groupe constitue par les radicaux alkyles linéaires comportant de 4 à 8 atomes de carbone, comme le radical butyle, le radical benzyle, un groupe oxyde de butylène ; par exemple TERGITOL^{™} L61E et le TERGITOL^{™} L64E
Des tensioactifs non ioniques peu moussant de formule R8-O-(S')q-H dans laquelle S' représente le reste d'un sucre réducteur choisis parmi les éléments du groupe constitue par le glucose, le xylose et l'arabinose, R8 représente un radical hydrocarboné saturé, linéaire ou ramifié, comportant de 6 à 10 atomes de carbone et q' représente un nombre décimal supérieur ou égal à 1,05 et inférieur ou égal à 5 ; par exemple les hexylpolyglucosides, les 2-ethyl hexyl polyglucosides, les n-heptyl polyglucosides ou les n-octyl polyglucosides ; les monoglycérides alcoxylés, les diglycérides alcoxylés, les hydrocarbures terpéniques alcoxylés tels que les alpha ou béta-pinenes éthoxylés et/ou propoxylés, contenant de 1 à 30 motifs oxyéthylène et/ou oxypropylène, les produits résultant de la condensation de l'oxyde d'éthylène ou de l'oxyde de propylène avec l'éthylènediamine, tels les TETRONIC^{™} commercialisés par BASF, les acides gras éthoxylés et/ou propoxylés en C8-C18 contenant de 5 à 25 moles d'oxyde d'éthylène et/ou de propylène, les amides gras éthoxylés contenant de 5 à 30 moles d'oxyde d'éthylène, les amines éthoxylées contenant de 5 à 30 moles d'oxyde d'éthylène, les amidoamines alcoxylées contenant de 1 à 50, de préférence de I à 25, tout particulièrement de 2 à 20 moles d'oxyde d'éthylène et/ou de propylène.

Comme exemples d'agents épaississants ou gélifiants optionnellement présents dans la formulation détergente telle que définie ci-dessus, il y a :
Les polysaccharides constitués uniquement d'oses, comme les glucanes ou homopolymères du glucose, les glucomannoglucanes, les xyloglycanes, les galactomannanes dont le degré de substitution (DS) des unités de D-galactose sur la chaine principale de D-mannose est compris entre 0 et 1, et plus particulièrement entre 1 et 0,25, comme les galactomannanes provenant de la gomme de cassia (DS = 0,20), de la gomme de caroube (DS = 0,25), de la gomme de tara (DS = 0,33), de la gomme de guar (DS = 0,50), de la gomme de fénugrec (DS = 1).
Les polysaccharides constitues de dérivés d'oses, comme les galactanes sulfates et plus particulièrement les carraghénanes et l'agar, les uronanes et plus particulièrement les algines, les alginates et les pectines, les hétéropolymères d'oses et d'acides uroniques et plus particulièrement la gomme xanthane, la gomme gellane, les exsudats de gomme de arabique et de gomme de karaya, les glucosaminoglycanes ;
Les dérivés de cellulose comme la méthyl-cellulose, l'éthyl-cellulose, l'hydroxypropyl cellulose, les silicates, l'amidon, les dérivés hydrophiles de l'amidon, les polyuréthanes ;
Les agents épaississants inorganiques comme par exemple les argiles, l'hectorite, la saponite, la sauconite, la vermiculite ou la silice colloïdale.

Comme exemples d'agents abrasifs optionnellement présents dans la formulation détergente telle que définie ci-dessus, il y a des matériaux d'origine naturelle comme des copeaux de bois ou de noyaux, des matériaux abrasifs inorganiques tels que des oxydes, des quartz, des terres diatomées, des dioxydes de silice colloïdales, des matériaux abrasifs organiques tels que des polyoléfines comme les polyéthylènes et les polypropylènes, des polystyrènes, des résines d'acétonitrile-butadiène-styrène, des mélamines, des résines phénoliques, des résines époxy, des résines polyuréthanes.

Comme exemples autres solvants optionnellement présents dans la formulation détergente telle que définie ci-dessus, il y a l'alcool benzylique, les solvants chlorés, l'acétone, le méthyl éthyl éther, le méthyl isobutyl éther, les acétates de butyle, d'éthyle, d'isopropyle ou d'isobutyle ; les solvants aromatiques, les isoparaffines, l'isododécane, les lactates d'éthyle ou de butyle, les solvants terpéniques, les esters méthyliques de colza, les esters méthyliques de tournesol, le propylène glycol n-méthyl ether, le dipropylene glycol n-methyl ether, le tripropylène glycol n-méthyl éther, le propylène glycol n-butyl éther, le di propylène glycol n-butyl éther, le tri propylène glycol n-butyl éther, le propylène glycol n-propyl éther, le di propylène glycol n-propyl éther, le propylène glycol mono méthyl éther acétate, le propylène glycol di acétate, le propylène glycol phényl éther, l'éthylène glycol phényl éther ou le di propylène glycol diméthyl éther.

Comme exemples d'enzymes optionnellement présentes dans la formulation détergente telle que définie ci-dessus, il y a les protéases, les amylases, les lipases, les cellulases et les peroxydases.

Les formulations détergentes à usage industriel ou ménager, comportant une phase polaire sont généralement préparées par un procédé comprenant les étapes successives suivantes :
Une étape a) de préparation d'un milieu aqueux comprenant de l'eau, optionnellement un alcool ou un polyol, dans une cuve à double enveloppe dans laquelle circule un fluide caloporteur à une température régulée ;
Une étape b) d'addition progressive dudit au moins un polysaccharide réticulé obtenu par le procédé objet de la présente invention dans le milieu aqueux préparé à l'étape a) à une température modérée comprise entre 20°C et 60°C, sous agitation modérée non cisaillante,
Une étape c) au cours de laquelle au moins un agent tensioactif détergent est ajouté dans le milieu résultant de l'étape b), et optionnellement
Une étape d) au cours de laquelle un ou plusieurs ingrédients auxiliaires sont ajoutés dans le milieu résultant de l'étape c).

Selon un autre aspect, l'invention a pour objet l'utilisation de ladite formulation détergente à usage industriel ou ménager, comportant une phase polaire, telle que définie précédemment, pour nettoyer les surfaces.

Selon un autre aspect, l'invention a pour objet un procédé de nettoyage d'une surface, caractérisé en ce qu'il comprend au moins une première étape a1) d'application de ladite formulation détergente à usage industriel ou ménager, comportant une phase polaire, suivie d'au moins une étape b1) de rinçage de ladite surface.

Dans le cadre de la présente invention par surface on désigne notamment les sols, les murs, les carreaux de fenêtres, les carrelages, les appareils électroménagers, la vaisselle, les plans de travail, la robinetterie, les éviers, des cuves de stockage de produits chimiques, alimentaires ou agricoles, les véhicules, ou les surfaces textiles. Les matériaux constituant ces surfaces solides sont par exemple le verre (sodocalcique, fluorocalcique, borosilicate, cristal), la porcelaine, la faïence, la céramique, les plastiques polycarbonates, polypropylènes, l'acier inoxydable, l'argent, le cuivre, l'aluminium, le bois, les résines synthétiques, la vitrocéramique, le linoleum, et peuvent être revêtus de peintures, de vernis.

Dans l'étape a1) du procédé tel que défini ci-dessus, ladite formulation détergente est appliquée sur la surface comprenant les salissures à nettoyer par tout moyen, par exemple en plein bain, par aspersion ou par application par l'intermédiaire d'un support constitue de fibres textiles synthétiques ou naturelles, tissées ou non tissées, ou de papier, préalablement imprégné de celle-ci.

Dans l'étape b1) du procédé tel que défini ci-dessus, le rinçage de la surface sur laquelle a été appliquée ladite formulation détergente lors de l'étape a1), est réalisé en plein bain ou par aspersion d'eau. L'étape b1) peut être réalisée à température ambiante ou à une température comprise entre 30°C et 80°C, plus particulièrement à une température comprise entre 30°C et 65°C.

Les exemples suivants illustrent l'invention, sans toutefois la limiter.

Préparation de xanthane réticulé par du STMP dans un mélange eau-éthanol (selon l'invention). Le procédé de synthèse comprend les étapes suivantes :
Etape A) : Chargement dans un réacteur double enveloppe en verre d'un litre sous agitation mécanique de 193 g d'un mélange hydroalcoolique d'éthanol 95% et d'eau dans un ratio massique 62/38 et de 30 g de xanthane,
Etape c) : Ajustement, à 25°C, du pH du mélange préparé à l'étape A) à une valeur de pH égale à 12,5 à l'aide d'une solution aqueuse tétramolaire de soude,
Etape d) : Addition dans le mélange issu de l'étape c) et chauffé à une température de 50°C de 0,018 g de STMP (soit 0,06% massique par rapport au xanthane) ; maintien sous agitation à cette température pendant deux heures, puis refroidissement jusqu'à 25°C,
Etape e) : Ajustement du pH du milieu réactionnel à 7 à l'aide d'une solution aqueuse pentamolaire d'acide chlorhydrique,
Etape f) : Filtration gravitaire du milieu réactionnel sur filtre papier (filtration moyenne de 4µm à 7µm),
Etape g) : Séchage du produit récupéré à l'étape f) entre 16 et 20 heures dans une étuve thermostatée à 50°C sous vide ; on obtient ainsi 24 g de polysaccharide (P1) sous forme de poudre blanche avec un rendement égal à 80% (par rapport au xanthane introduit).

Préparation de xanthane réticulé par du STMP dans un mélange Eau-Éthanol (comparatif). Le même procédé que celui décrit au paragraphe 051 précédent a été mis en œuvre en ajustant le pH de l'étape c) à 7,0 au lieu de 12,5. 24 g de polysaccharide (P1') ont été isolés sous forme de poudre blanche avec un rendement égal à 80% (par rapport au xanthane introduit).

Préparation de gomme xanthane réticulée par du STMP dans un mélange eau-éthanol (selon l'invention). Le procédé de synthèse comprend les étapes suivantes :
Etape A) : Chargement dans un réacteur double enveloppe en verre d'un litre sous agitation mécanique de 200 g d'un mélange hydroalcoolique d'éthanol 95% et d'eau dans un ratio massique 75/25 et de 60 g de gomme xanthane,
Etape c) : Ajustement, à 20°C, du pH du mélange préparé à l'étape) à une valeur de pH égale à 12,0 à l'aide d'une solution aqueuse tétramolaire de soude,
Etape d) : Addition dans le mélange issu de l'étape c) et chauffé à une température de 35°C de 0,69 g de STMP (soit 1,15% massique par rapport au xanthane) ; maintien sous agitation à cette température pendant une heure, puis refroidissement jusqu'à 20°C,
Etape e) : Ajustement du pH du milieu réactionnel à 7 à l'aide d'une solution aqueuse pentamolaire d'acide chlorhydrique,
Etape f) : Filtration gravitaire du milieu réactionnel sur filtre papier (filtration moyenne de 4 à 7µm),
Etape g) : Séchage du produit récupéré à l'étape f) entre 16 et 20 h dans une étuve à 50°C sous vide ; on obtient ainsi le polysaccharide (P2) sous forme de poudre blanche.

Préparation de xanthane lipophilisé et réticulée par du STMP dans un mélange eau -éthanol (selon l'invention). Le même procédé que celui décrit au paragraphe 051 précédent a été mis en œuvre en remplaçant la xanthane par une gomme de xanthane modifiée chimiquement, estérifiée par de l'acide dodécanoïque. 26 g de polysaccharide (P3) ont été isolés sous forme de poudre blanche avec un rendement égal à 86.7% (par rapport au xanthane lipophilisé en C-12 introduit).

Préparation de xanthane réticulée par du STMP dans un mélange eau-isopropanol (selon l'invention). Le même procédé que celui décrit au paragraphe 051 précédent a été mis en œuvre en remplaçant l'éthanol par l'isopropanol. 24,5 g de polysaccharide (P4) ont été isolés sous forme de poudre blanche avec un rendement égal à 81,7% (par rapport au xanthane introduit).

Préparation de gomme de konjac réticulée par du STMP dans un mélange eau-éthanol (selon l'invention). Le même procédé que celui décrit au paragraphe 053 précédent a été mis en œuvre en remplaçant le xanthane par la gomme de konjac. Le polysaccharide (P5) a été isolé sous forme de poudre blanche.

Préparation de gomme de guar réticulée par du STMP dans un mélange eau-éthanol (selon l'invention). Le même procédé que celui décrit au paragraphe 053 précédent a été mis en œuvre en remplaçant le xanthane par la gomme de guar. 54,3 g de polysaccharide (P6) ont été isolés sous forme de poudre blanche avec un rendement égal à 90,5% (par rapport à la gomme de guar introduite).

Préparation de kappa-carraghénane (k-carraghénane) réticulé par du STMP dans un mélange eau-éthanol (selon l'invention). Le même procédé que celui décrit au paragraphe 053 précédent a été mis en œuvre en remplaçant le xanthane par le k-carraghénane et en chauffer le milieu obtenu à l'étape A) à 80°C pendant une heure. 52,5 g de polysaccharide (P7) ont été isolés sous forme de poudre blanche avec un rendement égal à 87,5% (par rapport au k-carraghénane introduit).

Préparation d'iota-carraghénane (i-carraghénane) réticulé par du STMP dans un mélange eau-éthanol (selon l'invention). Le même procédé que celui décrit au paragraphe 058 précédent a été mis en œuvre en remplaçant le k-carraghénane par le i-carraghénane. 52,8 g de polysaccharide (P8) ont été isolés sous forme de poudre blanche avec un rendement égal à 88% (par rapport au i-carraghénane introduit).

Préparation d'i-carraghénane réticulée par du STMP dans un mélange eau-éthanol et en présence de sulfate de calcium (selon l'invention). Le même procédé que celui décrit au paragraphe 059 précédent a été mis en œuvre en introduisant à l'étape A) 0,3g de sulfate de calcium. Le polysaccharide (P9) a été isolé sous forme de poudre blanche.

Préparation de k-carraghénane réticulée par du STMP dans un mélange eau-éthanol et en présence de sulfate de calcium (selon l'invention). Le même procédé que celui décrit au paragraphe 060 précédent a été mis en œuvre en remplaçant la i-carraghénane par la k-carraghénane. 53,3 g de polysaccharide (P10) ont été isolés sous forme de poudre blanche avec un rendement égal à 88,8% (par rapport au k-carraghénane introduit).

Préparation d'un mélange de xanthane - i-carraghénane réticulé par du STMP dans un mélange eau - éthanol (selon l'invention). Le même procédé que celui décrit au paragraphe 059 précédent a été mis en œuvre en ajoutant 54 g de xanthane au niveau de l'étape A) (ratio massique xanthane - i-carraghénane = 9,0). 54,7 g de polysaccharide (P11) ont été isolés sous forme de poudre blanche avec un rendement égal à 91,2% (par rapport au mélange xanthane - i-carraghénane introduit).

Préparation d'un mélange de xanthane - i-carraghénane réticulé par du STMP dans un mélange eau-éthanol (selon l'invention). Le même procédé que celui décrit au paragraphe 062 précédent a été mis en œuvre en inversant le ratio massique xanthane - i-carraghénane. Pour ceci, 6 g de xanthane et 54 g de i-carraghénane ont été utilisés (ratio massique xanthane - i-carraghénane = 0,1). 54,4 g de polysaccharide (P12) ont été isolés sous forme de poudre blanche avec un rendement égal à 90,7% (par rapport mélange xanthane - i-carraghénane introduit).

Préparation d'un mélange de xanthane - k-carraghénane réticulé par du STMP dans un mélange eau - éthanol (selon l'invention). Le même procédé que celui décrit au paragraphe 062 précédent a été mis en œuvre en remplaçant le i-carraghénane par le k-carraghénane (ratio massique xanthane / k-carraghénane = 9,0). 53,5 g de polysaccharide (P13) ont été isolés sous forme de poudre blanche avec un rendement égal à 89,2% (par rapport au mélange xanthane - k-carraghénane introduit).

Préparation d'un mélange de xanthane - k-carraghénane réticulé par du STMP dans un mélange eau - éthanol (selon l'invention). Le même procédé que celui décrit au paragraphe 063 précédent a été mis en œuvre en inversant le ratio massique xanthane - k-carraghénane. Pour ceci, 6 g de xanthane et 54 g de k-carraghénane ont été utilisés (ratio massique xanthane - k-carraghénane = 0,1). 54,3 g de polysaccharide (P14) ont été isolés sous forme de poudre blanche avec un rendement égal à 90,5% (par rapport au mélange xanthane - k-carraghénane introduit).

Préparation des gels aqueux - Evaluation des propriétés épaississantes des polymères préparés. Les propriétés épaississantes des polysaccharides réticulés par le STMP selon l'invention Polysaccharide (P1) à Polysaccharide (P14) ont été évaluées et comparées à celles des polysaccharides correspondants non réticulés. La même caractérisation a été réalisée sur le polysaccharide (P1') dont l'étape de réticulation a été menée à un faible pH hors invention.

Préparation de gels aqueux : La méthode de réalisation des gels aqueux consiste à introduire dans un bécher de 2 litres, la quantité d'eau nécessaire à la préparation d'un gel de 800 g soit 792 g d'eau dans le cas d'un gel contenant 1% massique de produit réticulé. On place vers le fond du bécher une hélice d'agitateur mécanique connectée à un moteur. L'agitation est démarrée et la quantité nécessaire de polysaccharide réticulé est introduite dans le bécher sous agitation. L'agitation crée un vortex qui disparaît lorsque le polysaccharide s'hydrate et forme un gel. Dans le cas particulier des polysaccharides qui développent leur viscosité sous un effet thermique, un chauffage du gel entre 50 et 100°C pour aider à la solubilisation peut être nécessaire. Une partie du gel formé est conservée pour mesure de la viscosité. L'autre partie est utilisée pour fabriquer un gel contenant 1% de polysaccharide + 0,5% de chlorure de sodium. Pour cela 398 g de gel sont placés sous agitation à l'aide d'une hélice d'agitateur mécanique connectée à un moteur, 2 g de chlorure de sodium sont ensuite ajoutés. L'agitation est maintenue jusqu'à solubilisation totale du chlorure de sodium et obtention d'un gel homogène. Les gels ainsi préparés sont évalués trois heures puis vingt-quatre heures après préparation. La viscosité du gel est mesurée à l'aide d'un viscosimètre Brookfield RVT (vitesse 5, Mobile adapté à la viscosité) ou Brookfield LVT (vitesse 6). Les résultats sont rassemblés dans les tableaux 1 à 3 suivants.

**[Tableau 1]**

| | Gel à 1% PS | | Gel à 2% PS | |
|---|---|---|---|---|
| | Viscosité en mPa.s | | Viscosité en mPa.s | |
| | Gain de viscosité en % *** | | Gain de viscosité en % *** | |
| Polysaccharide (PS)↓ | | | | |
| PS non réticulé↓ | Sans NaCl | 0,5% NaCl | Sans NaCl | 0,5% NaCl |
| Xanthane | 3.140 | 12.650 | 11.600 | 40.200 |
| Xanthane C-12 | 32.000 | 5.000 | Nd | Nd |
| Gomme de Konjac | 26.200 | 24.800 | Nd | Nd |
| Gomme de Guar | 12.000 | 11.800 | Nd | Nd |
| k-Carraghénane | 10.080 | 39.400 | Nd | nd / |
| i-Carraghénane | nd | Nd | 45.600 | 45.200 |
| l-Carraghénane + CaSO₄ | 13.400 | 10.000 | Nd | Nd |
| k-Carraghénane + CaSO₄ | 60.600 | 33.200 | Nd | Nd |
| Xanthane - i-Carraghénane (9,0) | nd | nd | 5.600 | 4.0600 |
| Xanthane - i-Carraghénane (0,1) | nd | nd | 11.400 | 11.3600 |

**[Tableau 2]**

| | Gel à 1% PS | | Gel à 2% PS | |
|---|---|---|---|---|
| | Viscosité en en mPa.s | | Viscosité en mPa.s | |
| | Gain de viscosité en %*** | | Gain de viscosité en %*** | |
| PS non réticulé ↓ | Sans NaCl | 0,5% NaCl | Sans NaCl | 0,5% NaCl |
| Xanthane : k-Carraghénane (9,0) | nd | nd | 8.400 | 50.000 |
| Xanthane - i-Carraghénane (0,1) | nd | nd | 11.400 | 11.3600 |
| Xanthane / κ-Carraghénane (9,0) | nd | nd | 8.400 | 50.000 |
| PS réticulé ↓ | Sans NaCl | 0,5% NaCl | Sans NaCl | 0,5% NaCl |
| Polysaccharide (P1) | *32.500* (+*935,0%*) | 13.740 (*+8,6%*) | nd | Nd |
| Polysaccharide (P1') | 4.400 (+ *40,1%*) | 16.100 (+*27,3%*) | nd | Nd |
| Polysaccharide (P2) | 12.000 (+*282,2%*) | 18.600 (*+47,0%*) | 29.800 *(+ 156,9%)* | 51.800 (+ *28,9%*) |
| Polysaccharide (P3) | *19.000* (*+505,1%*) | 4.110 (*-67,5%*) | nd | Nd |
| Polysaccharide (P4) | 23.000 (*+632,5%*) | 16.100 (+*27,3%*) | nd | Nd |
| Polysaccharide (P5) | 59.600 (*+127,5%*) | 40.000 *(+61,3%)* | nd | Nd |
| Polysaccharide (P6) | 12.400 (+*3,3%*) | 12.200 (+*3,4*%) | nd | Nd |

**[Tableau 3]**

| | Gel à 1% PS | | Gel à 2% PS | |
|---|---|---|---|---|
| | Viscosité en mPa.s | | Viscosité en mPa.s | |
| | Gain de viscosité en %*** | | Gain de viscosité en %*** | |
| (PS) réticulé ↓ | Sans NaCl | 0,5% NaCl | Sans NaCl | 0,5% NaCl |
| Polysaccharide (P7) | 19.800 | 59.800 | nd | Nd |
| Polysaccharide (P8) | nd | nd | 83200 (+*82,5%*) | 62800 (*+38,9%*) |
| Polysaccharide (P9) | 24.200 (+*80,6%*) | 16.200 (*+62,0%*) | nd | Nd |
| Polysaccharide (P10) | 67.600 (*+11,6%*) | 103.400 (*+211,4%*) | nd | Nd |
| Polysaccharide (P11) | nd | nd | 16.400 (+*192,9%*) | 46.200 (+*13,8%*) |
| Polysaccharide (P12) | nd | nd | 22.200 (+*94,7*) | 118.600 (+*4,4*) |
| Polysaccharide (P13) | nd | nd | 26000 (+*209,5%*) | 41.600 (-*16,8*) |
| Polysaccharide (P14) | nd | nd | 61800 (+*11,9%*) | 56.600 (*-62,1*%) |

| | | | | |
|---|---|---|---|---|
| Nd : non déterminé *** Gain en viscosité = [(Viscosité (PX) - Viscosité du polysaccharide correspondant non réticulé) / Viscosité du polysaccharide correspondant réticulé] x 100. | | | | |

### Conclusions

Le bon déroulement des réactions de réticulation suivies de la précipitation du polysaccharide réticulé isolé sous forme de poudre (~ 100% de polymère) a été mis en évidence.

Dans la majorité des cas, la réticulation des polysaccharides par du STMP permet d'augmenter la viscosité des gels à 1 ou 2% de polysaccharides réticulés en présence ou non de NaCl. Ces augmentations relatives par rapport aux mêmes polysaccharides non réticulés varient entre 3,3% (*cf* (P6)) et 935% (*cf* (P1)). Dans un nombre de cas limité, une diminution est observée (*cf* (P3)*,* (P13) et (P14)).

L'utilisation d'éthanol ou d'isopropanol en tant que cosolvant de réticulation permet d'atteindre des gains comparables en termes de viscosité de gel (*cf* (P1) et( P4)).

Les exemples (P1) et P1') permettent d'apprécier l'influence du pH lors de l'étape de réticulation (respectivement 12,5 et 7,0).

Le procédé de réticulation selon l'invention a été validé à partir de polysaccharides seuls et de mélanges de polysaccharides.

Exemples de formulations détergentes selon l'invention

**[Tableau 4]**

| Gel nettoyant pour fours et grilles de cuissons | |
|---|---|
| Ingrédients | Proportions massiques (%) |
| SIMULSOL^{™}OX1309L | 2 % |
| SIMULSOL^{™}SL7G | 2 % |
| Polysaccharide réticulé (P1) | 6 % |
| Hydroxyde de sodium: | 25 % |
| Eau: | qs 100 % |

| Aspect visuel du gel | |
|---|---|
| A t = 0 à 25°C | Homogène |
| Après 6 mois à 25°C | |

| Viscosité du gel (Brookfield LVT 6rpm) | |
|---|---|
| A t = 0 à 25°C | 10.000 mPas |
| Après 6 mois à 25°C | 12.000 mPas |

**[Tableau 5]**

| Nettoyant pour surfaces en aluminium | |
|---|---|
| Ingrédients | Proportions massiques |
| SIMULSOL^{™}OX1309L | 3% |
| SIMULSOL^{™}SL7G | 3% |
| Polysaccharide réticulé (P1) | 5% |
| Acide phosphorique à 75% | 40% |
| HORDAPHOS MDGB 1% | 5% |
| Dipropylèneglycol méthyl éther | 5% |
| Eau: | qs 100% |
| Aspect visuel après stockage d'un mois à 40°C | Limpide et homogène |

**[Tableau 6]**

| Ingrédients utilisés dans les formulations détergentes mentionnées ci-dessus | |
|---|---|
| Nom commercial | Composition |
| SIMULSOL^{™} OX1309L | Composition tensioactive détergente comprenant des alcools polyéthoxylés résultant de la réaction d'un équivalent molaire de l'alcool EXXAL^{™}13 avec 9 équivalents molaires d'oxyde d'éthylène |
| SIMULSOL^{™}SL7G | solution de n-heptyl polyglucosides, agent hydrotrope et solubilisant. |
| HORDAPHOS MDGB 1% | Composition à base d'esters phosphoriques, utilisée comme agent anti-corrosion |

## Revendications

1. Procédé de préparation d'un polysaccharide réticulé comprenant les étapes suivantes ;
- Une étape a) de préparation d'un mélange eau - solvant polaire, ledit solvant polaire étant choisi dans le groupe constitué par les alcools aliphatiques comportant de un à quatre atomes de carbone, des cétones comportant de trois à cinq atomes de carbone et les polyols comportant deux ou trois groupes hydroxyle et de deux à six atomes de carbone, ladite préparation étant effectuée en mélangeant l'eau et ledit solvant polaire dans des proportions massiques telles que le rapport massique solvant polaire sur eau est supérieur ou égal à 0,4 et inférieur ou égal à 19,0;
- Une étape b) de dispersion d'au moins un polysaccharide dans ledit mélange eau - solvant polaire préparé à l'étape a), pour obtenir un milieu réactionnel comprenant pour 100% de sa masse, une proportion massique en polysaccharide supérieure à 10% massique et inférieure ou égale à 55% massique, ledit polysaccharide étant choisi dans le groupe constitué par la gomme xanthane, le xanthane greffé avec des chaines hydro-carbonées comportant de deux à vingt-deux atomes de carbone et plus particulièrement, la gomme xanthane estérifiée par de l'acide dodécanoïque, les gommes de guar et de konjac, les carraghénanes et plus particulièrement le kappa-carraghénane et l'iota-carraghénane et des mélanges de deux ou de plusieurs desdits polysaccharides de ce groupe ;
- Une étape c) d'ajustement du pH du milieu réactionnel préparé à l'étape b) à une valeur supérieure ou égale à 8,0 et inférieure ou égale à 13,0 en y ajoutant une base ;
- Une étape d) de réticulation dudit au moins un polysaccharide par addition dans le milieu réactionnel basique obtenu à l'issue de l'étape c), d'un agent de réticulation phosphate choisi dans le groupe constitué du trimétaphosphate de sodium (STMP) et du tripolyphosphate de sodium (STPP), pour obtenir une dispersion basique comprenant du polysaccharide réticulé ;
- Une étape e) d'ajustement du pH de ladite dispersion basique obtenue l'issue de l'étape d), à une valeur inférieure ou égale à 7,0 pour obtenir une dispersion non-basique dudit au moins un polysaccharide réticulé et
- Une étape f) de filtration de ladite dispersion non-basique obtenue à l'issue de l'étape e) pour en récupérer ledit au moins un polysaccharide réticulé attendu, optionnellement suivie :
- Soit d'une étape g) de séchage pour en éliminer les traces de solvants résiduels,
- Soit d'une étape h) d'atomisation dudit au moins un polysaccharide réticulé obtenu à l'étape f) pour en obtenir une poudre.

2. Procédé tel que défini à la revendication 1, dans lequel les étapes a) et b) sont simultanées et constituent une seule étape A) de préparation d'un milieu réactionnel par mélange d'eau, d'un solvant polaire choisi dans le groupe constitué par les alcools aliphatiques comportant de un à quatre atomes de carbone, des cétones comportant de trois à cinq atomes de carbone et les polyols comportant deux ou trois groupes hydroxyle et de deux à six atomes de carbone et d'un polysaccharide en des proportions telles que :
- la proportion massique en ledit au moins un polysaccharide est supérieure à 10% massique et inférieure ou égale à 55% massique dudit milieu réactionnel et que
- le rapport massique solvant polaire sur eau dudit mélange est supérieur ou égal à 0,4 et inférieur ou égal à 19,0.

3. Procédé selon l'une quelconque des revendications 1 à 2, dans lequel ledit solvant polaire du mélange préparé à l'étape a) ou dudit milieu réactionnel préparé à l'étape A), est choisi dans le groupe constitué par le méthanol, l'éthanol, le butanol, l'isopropanol, l'acétone, la méthyl éthyl cétone, le glycérol, le 1,3-propanediol, le butylèneglycol, le 1,3-butanediol, le pentylène glycol l'hexylène glycol et le 2-méthyl 2,4-pentanediol et, plus particulièrement dans le groupe constitué par l'éthanol et l'isopropanol.

4. Procédé tel que défini à l'une quelconque des revendications 1 à 3, dans lequel le rapport massique solvant polaire sur eau dudit mélange préparé à l'étape a) ou dudit milieu réactionnel préparé à l'étape A) est supérieur ou égal à 1,0, et inférieur ou égal à 4,0.

5. Procédé selon l'une quelconque des revendications 1 à 4, dans lequel ledit milieu réactionnel préparé à l'étape b) ou à l'étape A) comprend pour 100% de sa masse, une proportion massique en ledit au moins un polysaccharide supérieure ou égale à 15% et inférieure ou égale à 45% massique.

6. Procédé tel que défini à l'une quelconque des revendications 1 à 5, dans lequel à l'étape c), le pH est ajusté à une valeur supérieure ou égale à 10,0 et inférieure ou égal à 12,5.

7. Procédé tel que défini à l'une quelconque des revendications 1 à 6 dans lequel le rapport massique réticulant STMP ou STPP mis en œuvre à l'étape d) sur ledit au moins un polysaccharide de départ, est supérieur ou égal à 0,0001 et inférieur ou égal à 0,0700 et plus particulièrement supérieur ou égal à 0,0003 et inférieur ou égal à 0,0300.

8. Procédé tel que défini à l'une quelconque des revendications 1 à 7 dans lequel l'agent de réticulation mis en œuvre à l'étape d), est le trimétaphosphate de sodium (STMP).

9. Utilisation d'un polysaccharide réticulé ou d'un mélange de polysaccharides réticulés obtenu par le procédé selon l'une quelconque des revendications 1 à 8, en vue d'épaissir, de stabiliser ou d'émulsionner une formulation détergente à usage industriel ou ménager, comportant une phase polaire ou d'y suspendre des particules solides.

10. Formulation détergente à usage industriel ou ménager, comportant une phase polaire, **caractérisée en ce qu'**elle comprend pour 100% de sa masse, de 0,1% à10,0% et plus particulièrement de 0,5% à 5,0% d'un polysaccharide réticulé ou d'un mélange de polysaccharides réticulés obtenu par le procédé selon l'une quelconque des revendications 1 à 8, comme agent épaississant, comme agent stabilisant ou comme agent émulsionnant de ladite formulation détergente à usage industriel ou ménager, comportant une phase polaire ou comme agent apte et destiné à suspendre des particules solides au sein de ladite formulation détergente à usage industriel ou ménager, comportant une phase polaire

11. Utilisation de ladite formulation détergente à usage industriel ou ménager, comportant une phase polaire, telle que définie à la revendication 10, pour nettoyer les surfaces.

12. Procédé de nettoyage d'une surface, **caractérisé en ce qu'**il comprend au moins une première étape a1) d'application de ladite formulation détergente à usage industriel ou ménager, comportant une phase polaire, telle que définie à la revendication 10, suivie d'au moins une étape b1) de rinçage de ladite surface.
